# EUROPEAN PATENT APPLICATION

(11) **EP 4 626 103 A1**
(43) Date of publication of application: **01.10.2025**
(21) Application number: 23893957.3
(22) Date of filing: 23.11.2023
(51) Int. Cl.: H04W 72/04

(54) **COMMUNICATION METHOD AND APPARATUS, STORAGE MEDIUM, TERMINAL DEVICE, AND NETWORK DEVICE**

(30) Priority: 25.11.2022 CN 202211491510
(71) Applicant: Spreadtrum Communications (Shanghai) Co., Ltd., Shanghai 201203 (CN)
(72) Inventor: HAN, Lifeng, Shanghai 201203 (CN)
(74) Representative: Boult Wade Tennant LLP
(86) International application number: PCT/CN2023/133528
(87) International publication number: WO 2024/109868

(57) **Abstract**

The present application provides a communication method and apparatus, a storage medium, a terminal device and a network device. The communication method includes: sending auxiliary information of the (N+1)-th video frame before the (N+1)-th video frame is transmitted, where the auxiliary information of the (N+1)-th video frame is used to assist in scheduling and transmission of the (N+1)-th video frame, and N is a natural number. The technical solution of the present application can reduce data transmission delay, and reduce a packet loss rate of data transmission.

## Description

The present application claims priority to Patent Application No. 202211491510.4, filed to China National Intellectual Property Administration on November 25, 2022 and entitled "COMMUNICATION METHOD AND APPARATUS, STORAGE MEDIUM, TERMINAL DEVICE AND NETWORK DEVICE", which is hereby incorporated by reference in its entirety.

### TECHNICAL FIELD

The present application relates to the field of communication technologies, and in particular, to a communication method and apparatus, a storage medium, a terminal device and a network device.

### BACKGROUND

The fifth-generation mobile communication technology (5th generation mobile networks or 5th generation wireless systems, 5G) system introduces extended reality (Extended Reality, XR) in release 18 (Release, R18), that is, services such as augmented reality (Augmented Reality, AR)/virtual reality (Virtual Reality, VR)/mixed reality (Mixed Reality, MR)/extended reality and the like are transmitted through the 5G network. These services generally need to transmit high-definition real-time video data, and have features such as a large amount of data, a high requirement for transmission delay and the like, which brings great challenges to a transmission capability and a scheduling algorithm of the 5G network.

In the existing cellular wireless network, with regard to uplink, when data arrives at an access layer of a terminal device and can be transmitted, the terminal device generates a buffer status reporting (Buffer Status Reporting, BSR), and reports to a base station that "there are XXX bytes (Bytes) of uplink data needing to be transmitted in a current buffer". After receiving the buffer status reporting, the base station allocates a corresponding number of uplink wireless resources to the terminal device for the terminal device to transmit the uplink data. With regard to downlink, the base station may obtain an average data amount of an extended reality service through a procedure of establishing the extended reality service.

However, in the prior art, for the uplink data, when the terminal device reports the buffer status reporting to the base station, data has been encoded and is stored in a buffer. At this time, the base station is notified to allocate wireless resources, which may cause a relatively large data transmission delay. With regard to downlink data, a data amount of each video frame changes greatly, and the base station only knows the average data amount of the extended reality service, which is detrimental to wireless resource scheduling of the base station. If a data amount of a certain video frame suddenly increases, the base station cannot transmit it, and thus packet loss may be caused.

### SUMMARY

The present application provides a communication method and apparatus, a storage medium, a terminal device and a network device, which can reduce data transmission delay, and reduce a packet loss rate of data transmission.

In order to achieve the above objectives, the present application provides the following technical solutions.

In a first aspect, there is provided a communication method, and the communication method includes: sending auxiliary information of an (N+1)-th video frame before the (N+1)-th video frame is transmitted, where the auxiliary information of the (N+1)-th video frame is used to assist in scheduling and transmission of the (N+1)-th video frame, and N is a natural number.

Optionally, an N-th video frame is a video frame which has completed encoding processing and is being transmitted or is to be transmitted; the sending the auxiliary information of the (N+1)-th video frame includes: sending the auxiliary information of the (N+1)-th video frame together when sending the N-th video frame; or, sending the auxiliary information of the (N+1)-th video frame within a first time window after a sending moment of a last data packet of the N-th video frame; or, sending the auxiliary information of the (N+1)-th video frame within a second time window before a sending moment of a first data packet of the (N+1)-th video frame; where lengths of the first time window and the second time window are greater than or equal to zero.

Optionally, the sending the auxiliary information of the (N+1)-th video frame together when sending the N-th video frame includes: carrying the auxiliary information of the (N+1)-th video frame in a data packet header of the N-th video frame; or, sending the auxiliary information of the (N+1)-th video frame after a sending moment of a K-th data packet of the N-th video frame, where K is a positive integer.

Optionally, the sending the auxiliary information of the (N+1)-th video frame includes: carrying the auxiliary information of the (N+1)-th video frame in a media access control element (MAC CE), and sending the MAC CE.

Optionally, the sending the auxiliary information of the (N+1)-th video frame includes: sending a control plane signaling, where the control plane signaling includes the auxiliary information of the (N+1)-th video frame.

Optionally, the auxiliary information of the (N+1)-th video frame includes one or more of the following contents: a frame type; a data amount; an encoding and decoding correlation with the N-th video frame; priority information of a data packet; a predicted receiving time; a predicted sending time; a time distribution of predicted receiving times for respective data packets; a time distribution of predicted sending times for respective data packets.

Optionally, the data amount includes a size of a video frame, a total number of data packets and/or a number of data packets of various types.

Optionally, the priority information of the data packet includes a priority of a respective data packet and/or a number of data packets for each priority.

Optionally, the predicted receiving time is a predicted receiving moment, a first offset relative to a receiving moment of the N-th video frame, or a second offset relative to a receiving moment of the auxiliary information.

Optionally, the predicted sending time is a predicted sending moment, a third offset relative to a sending moment of the N-th video frame, or a fourth offset relative to a sending moment of the auxiliary information.

Optionally, when the (N+1)-th video frame is downlink data, the predicted receiving time is a time when the (N+1)-th video frame arrives at a network device; and when the (N+1)-th video frame is uplink data, the predicted receiving time is a time when the (N+1)-th video frame arrives at an access layer of a terminal device.

In a second aspect, the present application further discloses a communication method, and the communication method includes: receiving auxiliary information of an (N+1)-th video frame before the (N+1)-th video frame is received, where the auxiliary information of the (N+1)-th video frame is used to assist in transmission of the (N+1)-th video frame, and N is a natural number.

Optionally, the auxiliary information of the (N+1)-th video frame includes a data amount and/or priority information of a data packet, and the method further includes: allocating an uplink resource to the (N+1)-th video frame or adjusting an allocated semi-static uplink resource according to the data amount and/or the priority information of the data packet.

In a third aspect, the present application further discloses a communication apparatus, and the communication apparatus includes: a communication module, configured to send auxiliary information of an (N+1)-th video frame before the (N+1)-th video frame is transmitted, where the auxiliary information of the (N+1)-th video frame is used to assist in scheduling and transmission of the (N+1)-th video frame, and N is a natural number.

In a fourth aspect, the present application further discloses a communication apparatus, and the communication apparatus includes: a communication module, configured to receive auxiliary information of an (N+1)-th video frame before the (N+1)-th video frame is received, where the auxiliary information of the (N+1)-th video frame is used to assist in transmission of the (N+1)-th video frame, and N is a natural number.

In a fifth aspect, there is provided a computer readable storage medium, on which a computer program is stored, where when the computer program is run by a processor, any method provided by the first aspect or the second aspect is executed.

In a sixth aspect, there is provided a communication apparatus, including a memory and a processor, where the memory stores a computer program runnable on the processor, and when the processor runs the computer program, any method provided by the first aspect is executed.

In a seventh aspect, there is provided a communication apparatus, including a memory and a processor, where the memory stores a computer program runnable on the processor, and when the processor runs the computer program, any method provided by the second aspect is executed.

In an eighth aspect, there is provided a computer program product, on which a computer program is stored, where when the computer program is run by a processor, any method provided by the first aspect or the second aspect is executed.

In a ninth aspect, there is provided a communication system including the above terminal device and the above network device.

In a tenth aspect, an embodiment of the present application further provides a chip (or referred to as a data transmission apparatus), on which a computer program is stored, where when the computer program is executed by the chip, steps of the above method are implemented.

In an eleventh aspect, an embodiment of the present application further provides a system chip, which is applied to a terminal. The chip system includes at least one processor and an interface circuit, where the interface circuit and the at least one processor are interconnected by means of a line, and the at least one processor is configured to execute instructions so as to execute any method provided by the first aspect or the second aspect.

Compared with the prior art, the technical solutions of the embodiments of the present application have the following beneficial effects.

In the technical solution of the present application, the auxiliary information of the (N+1)-th video frame is sent before the (N+1)-th video frame is transmitted, where the auxiliary information of the (N+1)-th video frame is used to assist in scheduling and transmission of the (N+1)-th video frame. In the present application, auxiliary information about a video frame is sent in advance, which enables a receiver to allocate a suitable wireless resource for the video frame in time according to the auxiliary information, thereby ensuring that data can be transmitted timely and successfully, thus reducing a data transmission delay, reducing a packet loss rate of data transmission, and improving communication efficiency.

Further, the auxiliary information of the (N+1)-th video frame includes one or more of the following contents: a frame type; a data amount; an encoding and decoding correlation with the N-th video frame; priority information of a data packet; a predicted receiving time; a predicted sending time; a time distribution of predicted receiving times for respective data packets; a time distribution of predicted sending times for respective data packets. In the present application, by designing different auxiliary information contents, it enables the receiver to allocate wireless resources for video frames comprehensively and flexibly, further ensuring timely and successful data transmission.

### BRIEF DESCRIPTION OF DRAWINGS

FIG. 1 is a flowchart of a communication method provided by an embodiment of the present application.
FIG. 2 is an interaction flowchart of a communication method provided by an embodiment of the present application.
FIG. 3 is an interaction flowchart of another communication method provided by an embodiment of the present application.
FIG. 4 is an interaction flowchart of still another communication method provided by an embodiment of the present application.
FIG. 5 is a schematic structural diagram of another communication apparatus provided by an embodiment of the present application.
FIG. 6 is a schematic hardware structural diagram of a communication apparatus provided by an embodiment of the present application.

### DESCRIPTION OF EMBODIMENTS

A communication system to which embodiments of the present application is applicable includes, but is not limited to, a long term evolution (Long Term Evolution, LTE) system, a fifth-generation (5th-generation, 5G) system, a new radio (New Radio, NR) system, a future evolution system or a multi-communication convergence system. Among them, the 5G system may be a non-standalone (Non-Standard Alone, NSA) 5G system or a standalone (Standard Alone, SA) 5G system. The technical solutions of the present application are also applicable to different network architectures, including but not limited to architectures such as a relay network architecture, a dual-link architecture, a vehicle-to-everything (Vehicle-to-Everything) architecture, and the like.

The present application mainly relates to communication between a terminal device and a network device, in which:
The network device in the embodiments of the present application may also be referred to as an access network device, for example, may be a base station (Base Station, BS) (also referred to as a base station device). The network device is an apparatus deployed in a radio access network (Radio Access Network, RAN) to provide a wireless communication function. For example, a device providing a base station function in a second generation (2nd Generation, 2G) network includes a base transceiver station (Base Transceiver station, BTS), a device providing a base station function in a third generation (3rd-Generation, 3G) network includes a node B (NodeB), a device providing a base station function in a 4G network includes an evolved NodeB (evolved NodeB, eNB), a device providing a base station function in wireless local area networks (Wireless Local Area Networks, WLAN) is an access point (Access Point, AP), and a device providing a base station function in an NR is a next generation node base station (next generation Node Base Station, gNB), and a next generation evolved node B (ng-eNB). The communication between the gNB and the terminal device is performed using NR technology, the communication between the ng-eNB and the terminal device is performed using evolved universal terrestrial radio access (Evolved Universal Terrestrial Radio Access, E-UTRA) technology. Both the gNB and the ng-eNB may be connected to the 5G core network. The network device in the embodiments of the present application further includes a device that provides a base station function in a future new communication system, etc.

The terminal device (terminal equipment) in the embodiments of the present application may refer to various forms of access terminals, subscriber units, subscriber stations, mobile sites, mobile stations (Mobile Station, MS), remote stations, remote terminals, mobile devices, user terminals, wireless communication devices, user agents, or user apparatuses. The terminal device may also be a cell phone, a cordless phone, a session initiation protocol (Session Initiation Protocol, SIP) phone, or a wireless local loop (Wireless Local Loop, WLL) station, a personal digital assistant (personal digital assistant, PDA), a handheld device having a wireless communication function, a computing device or other processing devices connected to a wireless modem, an in-vehicle device, a wearable device, a terminal device in future 5G network or a terminal device in future evolved public land mobile network (Public Land Mobile Network, PLMN), etc., to which the embodiments of the present application is not limited. The terminal device may also be referred to as user equipment (User Equipment, UE), a terminal, and the like.

In the embodiments of the present application, core network is composed of core network elements. The core network elements may also be referred to as core network devices, and are network elements deployed in the core network, such as core network control plane network elements or core network user plane network elements. The core network in the embodiments of the present application may be an evolved packet core (Evolved Packet Core, EPC) or a 5G core network (5G core network), and may also be a new core network in future communication systems. For example, the 5G core network is composed of a group of network elements, and implements an access and mobility management function (Access and Mobility Management Function, AMF) such as functions of mobility management and the like, a user plane function (User Plane Function, UPF) providing functions such as packet routing forwarding, quality of service (Quality of Service, QoS) management and the like, and a session management function (Session Management Function, SMF) providing functions such as session management, Internet Protocol (Internet Protocol, IP) address allocation and management and the like, etc. The EPC may be composed of a mobility management entity (Mobility Management Entity, MME) that provides functions such as mobility management, gateway selection and the like, a serving gateway (Serving Gateway, S-GW) that provides functions such as packet forwarding and the like, and a packet data network gateway (Packet Data Network Gateway, P-GW) that provides functions such as terminal address allocation, rate control and the like.

As described in the background, in the prior art, for uplink data, when the terminal device reports a buffer status reporting to the base station, data has been encoded, and is stored in a buffer. At this time, the base station is notified to allocate wireless resources, which may cause a relatively large data transmission delay. With regard to downlink data, a data amount of each video frame changes greatly, and the base station only knows an average data amount of an extended reality service, which is detrimental to wireless resource scheduling of the base station. If a data amount of a certain video frame suddenly increases, the base station cannot transmit it, and thus packet loss may be caused.

The Applicant analyzes that the extended reality service also brings great challenges to algorithms of video encoders at an application layer. Since services are real-time, an encoding server needs to perform processing such as encoding, compressing and the like on video data as soon as possible, but a conventional video encoding compression algorithm cannot meet requirements. Hence, the third Generation Partnership Project (3rd Generation Partnership Project, 3GPP), taking practical situations into account, puts forward some requirements for video encoding and compression algorithms in the industry, and combined with transmission of downlink video data from an extended reality server to the base station, time lengths (in milliseconds (ms)) required for respective processing stages are as shown in Table 1.

**Table 1**

| | Pre-coding | Encoding | Transmission of video data from the extended reality server to the base station | Total |
|---|---|---|---|---|
| Minimum value | 10 | 2 | 3 | 15 |
| Maximum value | 20 | 17 | 10 | 47 |
| Typical value | 15 | 4 | 11 | 30 |

For the two steps of pre-coding and encoding in table 1, the downlink data is processed in the extended reality server, and the uplink data is processed in an extended reality client at the terminal side. The downlink requires the step of "transmission of downlink video data from the extended reality server to the base station", while the uplink does not require this step. No matter for the downlink or the uplink, for a typical extended reality service, 60 video frames need to be generated and transmitted every second, i.e., a picture is sampled every 16.67ms to generate a video frame. According to the processing duration in table 1, it can be concluded that when the time lengths are the minimum values, an (N+1)-th frame has not yet started to be processed when an N-th frame is transmitted to the base station. When the time lengths are the maximum values, the (N+1)-th frame has already started to be processed when the N-th frame still stays at the "pre-coding" stage. When the time lengths are the typical values, the (N+1)-th frame has already started to be processed when the N-th frame stays at the "encoding" stage.

In most cases, for the downlink, when the extended reality server starts to sample the (N+1)-th video frame, data of the N-th video frame still stays in the extended reality server, and pre-coding or encoding processing is being performed. For the uplink, when the extended reality client starts to sample the (N+1)-th video frame, there is a high probability that data of the N-th video frame is still being pre-coded or encoded at the extended reality client.

Due to the large data amount and high delay requirement of the extended reality service, if the 5G access network can obtain information about a next video frame in advance, even a part of the information, it is beneficial for the transmission of the 5G wireless network.

In the technical solution of the present application, before the (N+1)-th video frame is transmitted, auxiliary information about the (N+1)-th video frame is sent, and the auxiliary information about the (N+1)-th video frame is used to assist in scheduling and transmission of the (N+1)-th video frame. In the present application, auxiliary information about a video frame is sent in advance, which enables a receiver to allocate a suitable wireless resource to the video frame in time according to the auxiliary information, thereby ensuring that data can be transmitted timely and successfully, thus reducing a data transmission delay, reducing a packet loss rate of data transmission, and improving communication efficiency.

To make the above objectives, features, and advantages of the present application clearer and more comprehensible, the following describes specific embodiments of the present application in detail with reference to accompanying drawings.

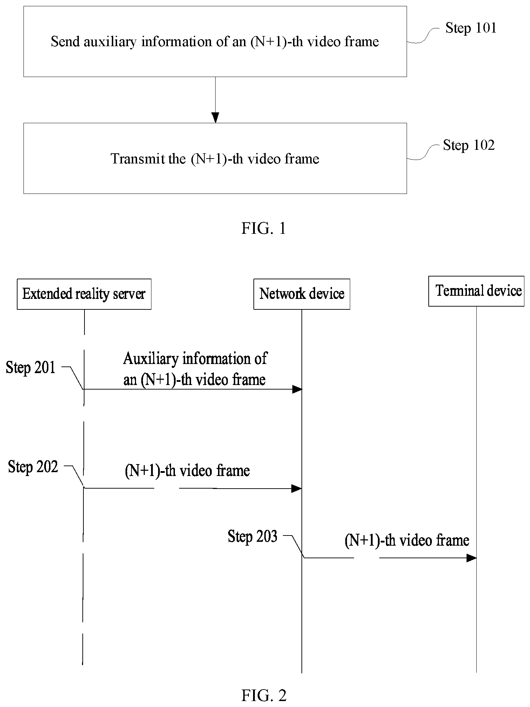

Referring to FIG. 1, a communication method provided by the present application includes the following.

Step 101: send auxiliary information of an (N+1)-th video frame.

Step 102: transmit the (N+1)-th video frame, where N is a natural number.

The communication method provided in this embodiment may be applied to an extended reality server, a core network element, an extended reality client, or a terminal device.

It can be understood that, in a specific implementation, the communication method may be implemented using a software program, and the software program runs in a processor integrated inside a chip or a chip module. The method may also be implemented in a manner of combining software with hardware, which is not limited in the present application.

The video frame in the embodiments of the present invention may be video frame data of the extended reality service, or may be any other data that may be implemented and has a large data amount and a high delay requirement, which is not limited in the present application.

In the embodiment of the present invention, the auxiliary information of the (N+1)-th video frame can be sent before the (N+1)-th video frame is transmitted. In a specific implementation of step 101, a sending time of the auxiliary information of the (N+1)-th video frame may be the time when the N-th video frame is sent.

Specifically, when the auxiliary information of the (N+1)-th video frame is acquired, the N-th video frame has completed the encoding processing and is being transmitted or to be transmitted. Then, the auxiliary information of the (N+1)-th video frame may be sent together with the N-th video frame, so as to save the transmission overhead.

Further, the auxiliary information of the (N+1)-th video frame may be carried in a data packet header of the N-th video frame. Or, the auxiliary information of the (N+1)-th video frame is sent after a sending moment of a K-th data packet of the N-th video frame, where K is a positive integer. Specifically, the K-th data packet may also be a last data packet of the N-th video frame. In this way, the transmission moment of the last data packet of the N-th frame and the transmission moment of the auxiliary information of the (N+1)-th frame are continuous in time.

In another specific implementation of step 101, the sending time of the auxiliary information of the (N+1)-th video frame may be within a first time window after the sending moment of the last data packet of the N-th video frame.

In this embodiment, the auxiliary information of the (N+1)-th video frame may be separately sent within the first time window after all data packets of the N-th video frame are sent. In this manner, the transmission moment of the last data packet of the N-th video frame and the transmission moment of the auxiliary information of the (N+1)-th video frame may be continuous or discontinuous in time. The maximum time interval between the two is a time length of the first time window, and may be, for example, K_offset1.

In another specific implementation of step 101, the sending time of the auxiliary information of the (N+1)-th video frame may be within a second time window before a sending moment of a first data packet of the (N+1)-th video frame.

In this embodiment, the auxiliary information of the (N+1)-th video frame may be separately sent within the second time window before the first data packet of the N-th video frame is sent. In this way, the transmission moment of the first data packet of the N-th video frame and the transmission moment of the auxiliary information of the (N+1)-th moment frame may be continuous or discontinuous in time. The maximum time interval between the two is a time length of the second time window, and may be, for example, K_offset2.

It should be noted that, K_offset1 and K_offset2 may be decimal, and a unit thereof may be millisecond, and may also be other time units. Specific values of K_offset1 and K_offset2 may be specified by a standard protocol, or agreed upon in advance, which is not limited in the present application.

In a non-limiting embodiment, the auxiliary information of the (N+1)-th video frame includes one or more of the following contents:
1. a frame type, such as I-frame, P-frame, B-frame or other frame types;
2. a data amount, which may specifically include a size of a video frame, a total number of data packets and/or the number of data packets of various types, for example, the size of the video frame is 50 Bytes, for another example, the total number of data packets is 100, for another example, the number of data packets of a control type is 30, the number of data packets of a data type is 40, and the number of data packets of other types is 30;
3. an encoding and decoding correlation with the N-th video frame, or an encoding and decoding correlation with any video frame before the (N+1)-th video frame, for example a correlation with the (N-1)-th video frame or the (N-2)-th video frame;
4. priority information of a data packet, which may specifically include a priority of a respective data packet and/or the number of data packets for each priority; may further include a distribution of priorities of respective data packets, for example,
   a Gaussian distribution, a Rayleigh distribution or a normal distribution, and coefficients corresponding to various types of distributions;
5. a predicted receiving time, for example, a moment when the (N+1)-th video frame arrives at the network device, a moment when the (N+1)-th video frame arrives at the access layer of the terminal device.
6. a predicted sending time, for example, a moment when the (N+1)-th video frame leaves the extended reality server, a moment when the (N+1)-th video frame leaves the extended reality client, for example, after 5ms and after 5 slots;
7. a time distribution of predicted receiving times for the respective data packets, which may specifically be simultaneous arrival, staged arrival, or a time distribution parameter of arrival;
8. a time distribution of predicted sending times for the respective data packets, which may specifically be simultaneous arrival, staged arrival, or a time distribution parameter of arrival.

Specifically, if an accurate data amount of the video frame can be acquired, the data amount of the video frame may be the accurate data amount of the video frame. If the accurate data amount of the video frame cannot be acquired, information such as history information and the like may be used to estimate the data amount of the video frame.

Specifically, the encoding and decoding correlation is represented by a correlation coefficient, and a value range of the correlation coefficient is [0-1]. The larger the correlation coefficient value is, the stronger the correlation is, and the smaller the correlation coefficient value is, the weaker the correlation is.

In a specific implementation, for the priority of the data packet, different priorities may be represented in a sequence, for example, 1, 2, 3, ... 16, to respectively represent priority levels of the priorities from high to low or from low to high.

In another specific implementation, the priority information of the data packet may be an indication indicating whether the data packet is an important packet, where a priority of the important packet is relatively high, and a priority of an unimportant packet is relatively low.

Specifically, the predicted receiving time may be a predicted receiving moment (i.e., an absolute time), a first offset relative to a receiving moment of the N-th video frame, or a second offset relative to a receiving moment of the auxiliary information (i.e., a relative time), for example, a time difference with a moment when the data packet of the N-th frame arrives at the base station. The moment when the data packet of the N-th frame arrives at the base station refers to an average moment when the data packet of the N-th frame arrives at the base station, or the moment when the first data packet of the N-th frame arrives at the base station, or the moment when the last data packet of the N-th frame arrives at the base station. Specifically, since reception of a data packet of the (N+1)-th video frame by the receiver is a matter of the future occurrence, the predicted receiving time is an estimated time.

Correspondingly, the predicted sending time is a predicted sending moment, a third offset relative to a sending moment of the N-th frame or a fourth offset relative to a sending moment of the auxiliary information, for example, a time difference with a moment when the data packet of the N-th video frame is expected to leave the extended reality server.

It should be noted that, the first offset, the second offset, the third offset, and the fourth offset may be specified by a communication standard protocol, and may also be configured by the network device, which is not limited in the present application.

Different embodiments are used for description according to different execution subjects.

Embodiment 1: referring to FIG. 2, at step 201, an extended reality server sends auxiliary information of an (N+1)-th video frame. Correspondingly, the network device receives the auxiliary information of the (N+1)-th video frame.

At step 202, the extended reality server sends the (N+1)-th video frame. Correspondingly, the network device receives the (N+1)-th video frame.

In a specific implementation, the network device may obtain a data amount of the (N+1)-th video frame according to the auxiliary information. If the data amount of the (N+1)-th video frame is large, the network device may notify in advance the terminal device to activate a larger bandwidth part (Band Width Part, BWP), or activate a cell with a larger bandwidth, so as to successfully transmit a large amount of data.

In another specific implementation, the network device may obtain the predicted receiving time (which may also be referred to as the arrival moment) of the (N+1)-th video frame according to the auxiliary information. The network device can require the terminal device to report an accurate channel measurement result in advance before the arrival of the (N+1)-th video frame, so as to select a modulation-demodulation manner matching the channel to transmit data, thereby improving the spectrum utilization.

At step 203, the network device sends the (N+1)-th video frame. Correspondingly, the terminal device receives the (N+1)-th video frame.

In a specific implementation, the network device may transmit the (N+1)-th video frame on the activated larger bandwidth part or on the activated cell with the larger bandwidth.

In another specific implementation, the network device may transmit the (N+1)-th video frame using a modulation-demodulation manner matching the channel.

In the embodiments of the present invention, by enabling the network device to obtain partial information of a next extended reality video frame in advance, the network device can prepare for data transmission, thereby realizing more efficient transmission of extended reality data.

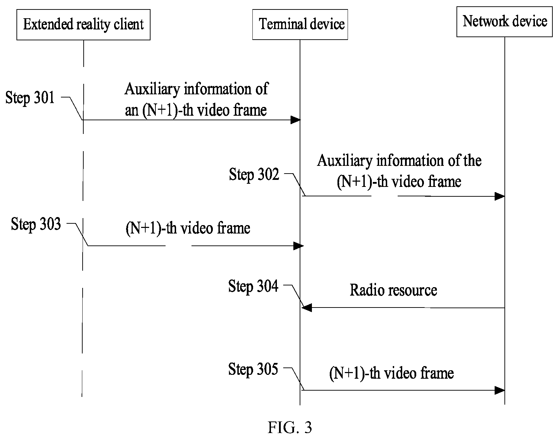

Embodiment 2: referring to FIG. 3, at step 301, an extended reality client sends auxiliary information of an (N+1)-th video frame. Correspondingly, the terminal device receives the auxiliary information of the (N+1)-th video frame.

The extended reality client referred to in this embodiment may be an application program in the terminal device, and is configured to process extended reality service data, for example, perform processing, such as pre-coding, encoding or decoding, on an extended reality service video frame.

The terminal device in this embodiment may be an access layer of the terminal device.

In this embodiment, the predicted receiving time in the auxiliary information refers to an estimated time when the access layer of the terminal device receives the auxiliary information; and the predicted sending time in the auxiliary information refers to an estimated time when the extend reality client sends the auxiliary information.

At step 302, the terminal device sends the auxiliary information of the (N+1)-th video frame to the network device. Correspondingly, the network device receives the auxiliary information of the (N+1)-th video frame.

In a specific implementation, the access layer of the terminal device sends a media access control (Media Access Control, MAC) control element (Control Element, CE) to the network device, where the MAC CE carries the auxiliary information of the (N+1)-th video frame. Specifically, the MAC CE may be a buffer status reporting (Buffer Status reporting, BSR).

At step 303, the extended reality client sends the (N+1)-th video frame. Correspondingly, the terminal device receives the (N+1)-th frame.

It should be noted that serial numbers of the steps at step 302 and step 303 do not represent a limitation to an execution sequence of each step. Step 303 may be executed first and then step 302 is executed, or step 302 and step 303 may be executed simultaneously.

At step 304, the network device allocates a radio resource for the terminal device. Specifically, the radio resource is an uplink resource.

In a specific implementation, the network device may obtain a data amount of the (N+1)-th video frame according to the auxiliary information, and determine the number of the allocated uplink radio resources according to the data amount, or update the allocated semi-static uplink resources, so as to adapt to the actual data amount.

In another specific implementation, the network device may obtain a priority of the (N+1)-th video frame according to the auxiliary information, and compare the priority of the (N+1)-th video frame with a priority of data of other terminal devices, so as to determine the number of radio resources allocated to each terminal device.

In still another specific implementation, the network device may obtain a starting transmission moment of the (N+1)-th video frame according to the auxiliary information, and allocate wireless resources at an appropriate moment.

In this embodiment, the network device may reallocate the radio resources or adjust the allocated semi-static uplink resources according to auxiliary information, so as to adapt to the (N+1)-th video frame, and ensure that the (N+1)-th video frame can be transmitted successfully. Thus, the transmission delay is reduced, and the spectrum utilization rate of air interface resources is improved.

At step 305, the terminal device sends the (N+1)-th video frame to the network device. Specifically, the terminal device sends the (N+1)-th video frame using the radio resource sent by the network device.

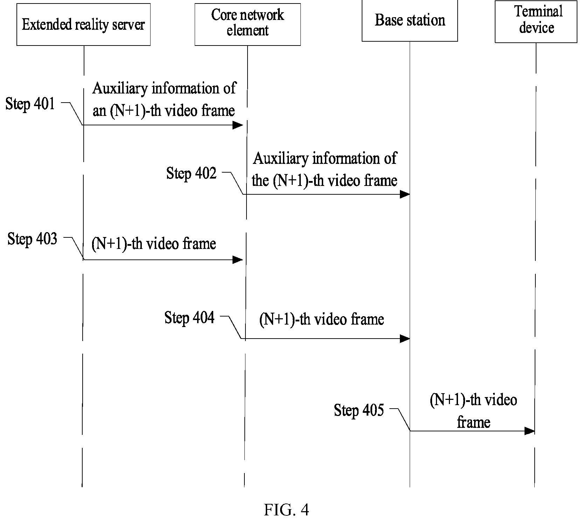

Embodiment 3: referring to FIG. 4, at step 401, an extended reality server sends auxiliary information of the (N+1)-th video frame. Correspondingly, a core network element receives the auxiliary information of the (N+1)-th video frame.

At step 402, the core network element sends the auxiliary information of the (N+1)-th video frame. Correspondingly, the base station receives the auxiliary information the (N+1)-th video frame.

In a specific implementation, the core network element may send a control plane signaling, where the control plane signaling includes the auxiliary information of the (N+1)-th video frame. For example, the core network element herein may be an AMF or an SMF, and the control plane signaling may be a next generation application protocol (Next Generation Application Protocol, NGAP) signaling between the core network element and the base station.

In another specific implementation, a user plane data packet header sent by the core network element to the base station includes the auxiliary information of the (N+1)-th video frame. For example, the auxiliary information of the (N+1)-th video frame is carried in a header of a data packet between the core network element and the base station. For example, the core network element herein may be an UPF, the header of the data packet may be a GPRS Tunneling Protocol User Plane (GTPU) header, and the GTPU tunnel refers to a tunnel for transmitting the data packet between the UPF and the base station.

At step 403, the extended reality server sends the (N+1)-th video frame. Correspondingly, the core network element receives the (N+1)-th video frame.

At step 404, the core network element sends the (N+1)-th video frame to the base station.

At step 405, the base station sends the (N+1)-th video frame to the terminal device.

In this embodiment, the base station may obtain a data amount of the (N+1)-th video frame according to the auxiliary information. If the data amount of the (N+1)-th video frame is large, the base station may notify the terminal device in advance to activate a larger bandwidth part or activate a cell with a larger bandwidth. The (N+1)-th video frame is transmitted on the activated larger bandwidth part or on the activated cell with the larger bandwidth, thereby enabling successful transmission of a large amount of data.

In this embodiment, the base station may also obtain the predicted receiving time (which may also be referred to as the arrival moment) of the (N+1)-th video frame according to the auxiliary information. The network device may require the terminal device to report an accurate channel measurement result in advance before the arrival of the (N+1)-th video frame, so as to select a modulation-demodulation manner matching the channel to transmit data. The base station may transmit the (N+1)-th video frame in a modulation-demodulation manner matching the channel, so as to improve the spectrum utilization.

For more specific implementations of the embodiments of the present application, reference may be made to the foregoing embodiments, and details are not described herein again.

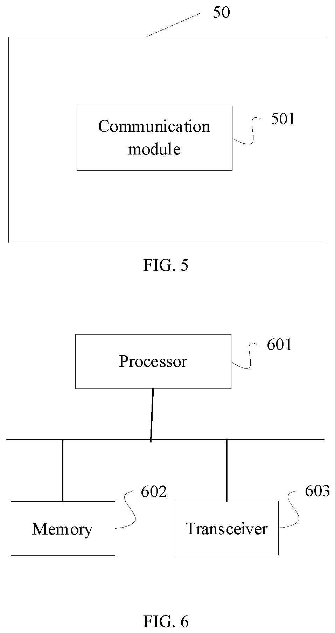

Please refer to FIG. 5, FIG. 5 shows a communication apparatus 50. The communication apparatus 50 may include:
a communication module 501, configured to send auxiliary information of an (N+1)-th video frame before the (N+1)-th video frame is transmitted, where the auxiliary information of the (N+1)-th video frame is used to assist in scheduling and transmission of the (N+1)-th video frame.

In a specific implementation, the communication apparatus 50 may correspond to a chip having a communication function in an extended reality server, an extended reality client, a terminal device, and a network device (which may specifically be a base station or a core network element), for example, a system on chip (System-On-a-Chip, SOC), a baseband chip, and the like; or correspond to a chip module having a power control parameter determination function included in the described devices, or correspond to a chip module having a data processing function chip, or correspond to the described devices.

In a non-limiting embodiment, the communication module 501 is configured to receive auxiliary information of the (N+1)-th video frame before receiving the (N+1)-th video frame.

In a specific implementation, the communication apparatus 50 may correspond to a chip having a communication function in a terminal device, a core network element and a base station, for example, a system on chip (System-On-a-Chip, SOC), a baseband chip, and the like; or correspond to a chip module having a power control parameter determination function included in the described devices, or correspond to a chip module having a data processing function chip, or correspond to the described devices.

For other relevant descriptions of the communication apparatus 50, reference may be made to the relevant descriptions in the foregoing embodiments, and details are not repeatedly described herein.

With regard to a respective module/unit included in a respective apparatus or product described in the foregoing embodiments, it may be a software module/unit, may also be a hardware module/unit, or a part being a software module/unit while a part being a hardware module/unit. For example, with regard to various apparatuses and products applied to or integrated in a chip, various modules/units included therein can all be realized by means of hardware, such as a circuit and the like, or at least some of the modules/units can be realized by means of a software program running on a processor integrated inside the chip, and the remaining part (if any) of the modules/units can be realized by means of hardware, such as a circuit. With regard to various apparatuses and products applied to or integrated in a chip module, various modules/units contained therein can all be realized by means of hardware, such as a circuit. Different modules/units may be located in the same component (e.g., a chip, a circuit module, etc.) or in different components of the chip module. Alternatively, at least some of the modules/units may be implemented using a software program running on a processor integrated within the chip module, and the remaining part (if any) of the modules/units may be implemented by hardware, such as a circuit. With regard to various apparatuses and products applied to or integrated into a terminal device, various modules/units included therein can all be realized by means of hardware, such as a circuit. Different modules/units may be located in the same component (e.g., a chip, a circuit module, etc.) or in different components within the terminal device. Alternatively, at least some of the modules/units may be implemented using a software program running on a processor integrated inside the terminal device, and the remaining part (if any) of the modules/units may be implemented by hardware, such as a circuit.

An embodiment of the present application further discloses a storage medium. The storage medium is a computer-readable storage medium on which a computer program is stored. When the computer program runs, the steps of the method shown in FIG. 1 to FIG. 3 can be executed. The storage medium may include a read-only memory (Read-Only Memory, ROM), a random access memory (Random Access Memory, RAM), a magnetic disk, or an optical disk, etc. The storage medium may also include a non-volatile memory, a non-transitory memory, or the like.

Please refer to FIG. 6, an embodiment of the present application further provides a schematic hardware structural diagram of a communication apparatus. The apparatus includes a processor 601, a memory 602, and a transceiver 603.

The processor 601 may be a central processing unit (central processing unit, CPU), a microprocessor, an application-specific integrated circuit (application-specific integrated circuit, ASIC), or one or more integrated circuits for controlling execution of programs in the solutions of the present application. The processor 601 may also include a plurality of CPUs, and the processor 601 may be a single-CPU or multi-CPU processor. The processor herein may refer to one or more devices, circuits, or processing cores for processing data (such as computer program instructions).

The memory 602 may be a ROM or other type of static storage device that may store static information and instructions, a RAM, or other type of dynamic storage device that may store information and instructions, or may be an electrically erasable programmable read-only memory (electrically erasable programmable read-only memory, EEPROM) or a compact disc read-only memory (compact disc read-only memory, CD-ROM), or other optical disc storage, optical disc storage (including compact disc, laser disc, optical disc, digital versatile disc, Blu-ray disc, etc.), magnetic disk storage media or other magnetic storage devices, or any other medium that can be used to carry or store desired program codes in the form of instructions or data structures and that can be accessed by a computer. The embodiment of the present application does not impose any limitation thereto. The memory 602 may be independent (in this case, the memory 602 may be located outside the apparatus, or may also be located inside the apparatus), or may also be integrated with the processor 601. The memory 602 may include computer program codes. The processor 601 is configured to execute the computer program codes stored in the memory 602, so as to implement the method provided by the embodiments of the present application.

The processor 601, the memory 602, and the transceiver 603 are connected through a bus. The transceiver 603 is configured to communicate with another device or communication network. Optionally, the transceiver 603 may include a transmitter and a receiver. A component configured to implement a receiving function in the transceiver 603 may be considered as a receiver, and the receiver is configured to execute a receiving step in the embodiments of the present application. A component configured to implement a sending function in the transceiver 603 may be considered as a transmitter, and the transmitter is configured to execute a sending step in the embodiments of the present application.

When the schematic structural diagram shown in FIG. 6 is used to illustrate a structure of the terminal device, the network device, the extended reality server, or the extended reality client involved in the foregoing embodiments, the processor 601 is configured to perform control and management on an action of the foregoing devices.

In the embodiments of the present application, a unidirectional communication link from an access network to the terminal device is defined as a downlink, data transmitted on the downlink is downlink data, and a transmission direction of the downlink data is referred to as a downlink direction. A unidirectional communication link from the terminal device to the access network is an uplink, data transmitted on the uplink is uplink data, and a transmission direction of the uplink data is referred to as an uplink direction.

It should be understood that, the term "and/or" herein is only used to describe an association relationship for associated objects, and indicates that three relationships may exist. For example, A and/or B may indicate three cases: A exists separately, A and B exist simultaneously, and B exists separately. In addition, the character "/" herein indicates that the associated objects before and after are in an "or" relationship.

The term "a plurality of" in the embodiments of the present application refers to two or more.

The descriptions of the first, the second, and the like appearing in the embodiments of the present application are only intended to illustrate and distinguish the described objects, they have no order, and do not represent a particular limitation to the number of devices in the embodiments of the present application, and cannot constitute any limitation to the embodiments of the present application.

The term "connect" in the embodiments of the present application refers to various connection manners, such as a direct connection or an indirect connection, so as to implement communication between devices, and the embodiments of the present application do not impose any limitation thereto.

The embodiments described above may be implemented in whole or in part by software, hardware, firmware, or any combination thereof. When implemented using software, the embodiments described above may be implemented in whole or in part in the form of a computer program product. The computer program product includes one or more computer instructions or computer programs. When the computer instructions or computer programs are loaded or executed on a computer, a procedure or function according to the embodiments of the present application is completely or partially generated. The computer may be a general purpose computer, a special purpose computer, a computer network, or other programmable apparatuses. The computer instructions may be stored in a computer readable storage medium, or transmitted from one computer readable storage medium to another computer readable storage medium. For example, the computer instructions may be transmitted from one website, computer, server, or data center to another website, computer, server, or data center in a wired or wireless manner.

It should be understood that, in various embodiments of the present application, a serial number of each of the foregoing processes does not imply an execution sequence, and the execution sequence of each of the processes should be determined according to a function and an internal logic thereof, which should not constitute any limitation to an implementation process of the embodiments of the present application.

In the several embodiments provided in the present application, it should be understood that the disclosed method, apparatus, and system may be implemented in other manners. For example, the apparatus embodiments described above are merely exemplary; for example, a division of the units is merely logical function division, and may be other division in actual implementations. For example, a plurality of units or components may be combined or integrated into another system, or some features may be omitted or not performed. In addition, the displayed or discussed mutual couplings or direct couplings or communication connections may be indirect couplings or communication connections through some interfaces, apparatuses or units and may be implemented in electronic, mechanical, or other forms.

The units described as separate parts may or may not be physically separate, and parts displayed as units may or may not be physical units, that is, they may be located in one position, or may be distributed on a plurality of network elements. A part or all of the units may be selected according to actual requirements to achieve the objectives of the solutions of the embodiments.

In addition, various functional units in the embodiments of the present application may be integrated into one processing unit, or each of the units may be physically included separately, or two or more units may be integrated into one unit. The integrated unit may be implemented in a form of hardware, or may also be implemented in a form of hardware plus a software functional unit.

The integrated unit implemented in the form of a software functional unit may be stored in a computer readable storage medium. The software functional unit is stored in a storage medium, and includes several instructions for instructing a computer device (which may be a personal computer, a server, or a network device) to perform a part of the steps of the methods described in the embodiments of the present application.

Although the present application is described above, the present application is not limited thereto. Any person skilled in the art can make various changes and modifications without departing from the spirit and scope of the present application, and therefore the protection scope of the present application shall be subject to the scope defined by the claims.

## Claims

1. A communication method, comprising:
sending auxiliary information of an (N+1)-th video frame before the (N+1)-th video frame is transmitted, wherein the auxiliary information of the (N+1)-th video frame is used to assist in scheduling and transmission of the (N+1)-th video frame, and N is a natural number.

2. The communication method according to claim 1, wherein an N-th video frame is a video frame which has completed encoding processing and is being transmitted or is to be transmitted; the sending the auxiliary information of the (N+1)-th video frame comprises:
sending the auxiliary information of the (N+1)-th video frame together when sending the N-th video frame; or,
sending the auxiliary information of the (N+1)-th video frame within a first time window after a sending moment of a last data packet of the N-th video frame; or,
sending the auxiliary information of the (N+1)-th video frame within a second time window before a sending moment of a first data packet of the (N+1)-th video frame; wherein lengths of the first time window and the second time window are greater than or equal to zero.

3. The communication method according to claim 2, wherein the sending the auxiliary information of the (N+1)-th video frame together when sending the N-th video frame comprises:
carrying the auxiliary information of the (N+1)-th video frame in a data packet header of the N-th video frame; or,
sending the auxiliary information of the (N+1)-th video frame after a sending moment of a K-th data packet of the N-th video frame, wherein K is a positive integer.

4. The communication method according to claim 1, wherein the sending the auxiliary information of the (N+1)-th video frame comprises:
carrying the auxiliary information of the (N+1)-th video frame in a media access control element (MAC CE), and sending the MAC CE.

5. The communication method according to claim 1, wherein the sending the auxiliary information of the (N+1)-th video frame comprises:
sending a control plane signaling, wherein the control plane signaling comprises the auxiliary information of the (N+1)-th video frame.

6. The communication method according to claim 1, wherein the auxiliary information of the (N+1)-th video frame comprises one or more of the following contents:
a frame type;
a data amount;
an encoding and decoding correlation with the N-th video frame;
priority information of a data packet;
a predicted receiving time;
a predicted sending time;
a time distribution of predicted receiving times for respective data packets;
a time distribution of predicted sending times for respective data packets.

7. The communication method according to claim 6, wherein the data amount comprises a size of a video frame, a total number of data packets and/or a number of data packets of various types.

8. The communication method according to claim 6, wherein the priority information of the data packet comprises a priority of a respective data packet and/or a number of data packets for each priority.

9. The communication method according to claim 6, wherein the predicted receiving time is a predicted receiving moment, a first offset relative to a receiving moment of the N-th video frame, or a second offset relative to a receiving moment of the auxiliary information.

10. The communication method according to claim 6, wherein the predicted sending time is a predicted sending moment, a third offset relative to a sending moment of the N-th video frame, or a fourth offset relative to a sending moment of the auxiliary information.

11. The communication method according to claim 6, wherein when the (N+1)-th video frame is downlink data, the predicted receiving time is a time when the (N+1)-th video frame arrives at a network device; and when the (N+1)-th video frame is uplink data, the predicted receiving time is a time when the (N+1)-th video frame arrives at an access layer of a terminal device.

12. A communication method, comprising:
receiving auxiliary information of an (N+1)-th video frame before the (N+1)-th video frame is received, wherein the auxiliary information of the (N+1)-th video frame is used to assist in transmission of the (N+1)-th video frame, and N is a natural number.

13. The communication method according to claim 12, wherein the auxiliary information of the (N+1)-th video frame comprises a data amount and/or priority information of a data packet, and the method further comprises:
allocating an uplink resource to the (N+1)-th video frame or adjusting an allocated semi-static uplink resource according to the data amount and/or the priority information of the data packet.

14. A communication apparatus, comprising:
a communication module, configured to send auxiliary information of an (N+1)-th video frame before the (N+1)-th video frame is transmitted, wherein the auxiliary information of the (N+1)-th video frame is used to assist in scheduling and transmission of the (N+1)-th video frame, and N is a natural number.

15. A communication apparatus, comprising:
a communication module, configured to receive auxiliary information of an (N+1)-th video frame before the (N+1)-th video frame is received, wherein the auxiliary information of the (N+1)-th video frame is used to assist in transmission of the (N+1)-th video frame, and N is a natural number.

16. A computer readable storage medium, on which a computer program is stored, wherein when the computer program is run by a computer, steps of communication according to any one of claims 1 to 13 are executed.

17. A terminal device, comprising a memory and a processor, wherein the memory stores a computer program runnable on the processor, and when the processor runs the computer program, steps of the communication method according to any one of claims 1 to 11 are executed.

18. A network device, comprising a memory and a processor, wherein the memory stores a computer program runnable on the processor, and when the processor runs the computer program, steps of the communication method according to claim 12 or 13 are executed.
